(19) Europäisches Patentamt / European Patent Office / Office européen des brevets

(11) **EP 3 855 173 A1**

(12) **EUROPEAN PATENT APPLICATION**

(43) Date of publication:
**28.07.2021 Bulletin 2021/30**

(51) Int Cl.:
*G01N 21/90* (2006.01)  *G01N 21/95* (2006.01)

(21) Application number: **20153308.0**

(22) Date of filing: **23.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SCHOTT Schweiz AG**
**9001 St. Gallen (CH)**

(72) Inventors:
• **Willmes, Daniel**
  **8585 Langrickenbach (CH)**
• **Sosman, Igor**
  **9008 St. Gallen (CH)**

(74) Representative: **Patent- und Rechtsanwälte Ullrich & Naumann PartG mbB Schneidmühlstrasse 21 69115 Heidelberg (DE)**

(54) **DETECTION AND CHARACTERIZATION OF DEFECTS IN PHARMACEUTICAL CYLINDRICAL CONTAINERS**

(57)    Herein described is a specific apparatus for inspecting a pharmaceutical cylindrical container (1), an improved method for inspecting a pharmaceutical cylindrical container and a specific bundle of pharmaceutical cylindrical container with a light emitting unit (9) and a light receiving unit (12) to acquire polarization information.

Fig. 1

**Description**

The present invention relates to a specific apparatus for inspecting a pharmaceutical cylindrical container made of a glass or of a polymer, wherein the apparatus comprises a support device, a light receiving unit and a light emitting unit.

Further, the present invention relates to a specific method for inspecting a pharmaceutical cylindrical container made of a glass or of a polymer. Moreover, herein a specific bundle of pharmaceutical cylindrical container being inspected by the specific apparatus and/or the specific method according to the invention is described.

To obtain pharmaceutical cylindrical bodies having a high quality, a raft of measures is necessary. For example, it is possible to improve the manufacturing processes of the cylindrical bodies. However, these improvements have certain limits, and there is a point where the costs exceed the resultant benefit. Furthermore, there is a certain quality level, which cannot be reliably achieved by all cylindrical bodies. In general, it is possible to pack the produced cylindrical bodies to a bundle without any inspection. Even if the overall average quality may be high, this has the drawback that if one of the pharmaceutical cylindrical bodies has a low quality, this at first becomes apparent at a late stage of production or even later.

Another approach to improve the overall quality of the cylindrical bodies is to produce cylindrical bodies having an average quality and improve the overall quality by sorting out the cylindrical bodies having a quality below a specific value. Thereby, to obtain a good evaluation of the cylindrical bodies, it is important to evaluate the entire cylindrical body. To handle the evaluation in a production line, a fast, efficient and reliable evaluation is needed. Thereby, a fast and efficient and reliable evaluation of the cylindrical body is only possible, if the cylindrical body is rotated around its own axis. If a defect is detected, the pharmaceutical cylindrical container can be disregarded from further processing.

Especially pharmaceutical cylindrical containers such as syringes, carpules, vials etc. have to fulfil strict quality standards. For example, it has to be avoided that these containers comprise defects like bubbles inside the material or particles on the surface. Since most of the pharmaceutical cylindrical containers being relevant for the invention are mass products, the inspection has to be conducted as fast as possible. Notwithstanding, it has to be assured that pharmaceutical cylindrical containers comprising any defects are reliably identified and characterized such that they can be disregarded from further processing. For this reason, it is important that a defect can be certainly detected and characterized while the pharmaceutical cylindrical container is rotated around its longitudinal axis.

A problem of the known methods and apparatuses is, that the time necessary for inspecting a pharmaceutical cylindrical container is long and that especially small defects are not detected and characterized reliably. In addition, especially the characterization of a defect even with acquiring a multitude of images is a difficult task to solve.

The invention described herein addresses the problem of improving and further developing an apparatus and a method for inspecting a pharmaceutical cylindrical container made of a glass or of a polymer such that a fast and reliable inspection of the pharmaceutical cylindrical containers and characterization of the defects are achieved.

In an embodiment the present invention provides an apparatus for inspecting a pharmaceutical cylindrical container made of a glass or of a polymer, wherein the apparatus comprises a support device, a light emitting unit and a light receiving unit; wherein the support device supports the pharmaceutical cylindrical container, such that the pharmaceutical cylindrical container is rotatable around its longitudinal axis; wherein the light emitting unit comprises a light source and is configured to illuminate the pharmaceutical cylindrical container with an inspection beam; and wherein the light receiving unit comprises a camera and is configured to receive a detection beam from the pharmaceutical cylindrical container and to acquire polarization information of the detection beam.

In a further embodiment, the present invention provides a method for inspecting a pharmaceutical cylindrical container made of a glass or of a polymer, preferably by using an apparatus according to any one of the preceding claims, comprising the following steps:

- illuminating the pharmaceutical cylindrical container with an inspection beam;
- receiving at least one detection beam from the pharmaceutical cylindrical container with a light receiving unit; and
- acquiring polarization information of the detection beam.

In a further embodiment, the present invention relates to a bundle of pharmaceutical cylindrical container made of glass or of a polymer, preferably being inspected by an apparatus according to any one of the preceding claims and/or a method according to any one of the preceding claims, wherein the bundle comprises 10 or more pharmaceutical cylindrical containers; and wherein each pharmaceutical cylindrical container exhibits no defect on the outer surface having a size of 40 mm or more, preferably 30 mm or more, more preferably 20 mm or more, more preferably 10 mm or more, more preferably 2 mm or more; and/or wherein each pharmaceutical cylindrical container exhibits no wall penetrating defect having a size of 0.5 mm or more, preferably 0.3 mm or more, preferably 0.1 mm or more, more preferably 0.05 mm or more.

By receiving a detection beam from the pharmaceutical cylindrical container and acquiring polarization information of the detection beam, it is possible to detect defects either in the pharmaceutical cylindrical container or on the lateral surface of the pharmaceutical cylindrical container. Thus, at least two different effects can be used to detect and characterize defects in or on a pharmaceutical cylindrical container.

For example, if an inspection beam of unpolarized light is reflected by the surface of a pharmaceutical cylindrical container, the reflected light beam is linear polarized, especially if the illumination and detection is carried out in the Brewster's angle. Consequently, by measuring the linear polarized detection beam, defects on the surface of the pharmaceutical cylindrical container appear darker compared to the defect-free surface. In contrast, if the linear polarized light is blocked by a filter, scattered light being caused by defects on the surface of the container appear brighter compared to a defect-free surface of the pharmaceutical cylindrical container.

In addition, by illuminating the pharmaceutical cylindrical container in a bright field arrangement and using linear polarized light as an inspection beam, the polarization plane will change if the pharmaceutical cylindrical container is anisotropic, e.g. if it is made of a polymer using injection molding. Consequently, defects in the material of the pharmaceutical cylindrical container can be detected, if polarization information of the detection beam is acquired. Thereby, especially defects like slides, matt surfaces, or flow lines can be detected, even if they are very small. In addition, defects which are located within the material cause structural inhomogenities such as stress. Using this effect, it is possible to detect the defect based on the inhomogeneity of the material around the defect. Thus, it is further possible to characterize the defects. Thus, a further advantage of the invention is that the defect appearance of polymer pharmaceutical cylindrical containers produced in injection molding processes are enhanced.

This is achieved by using the effect that an inspection beam of unpolarized light will become polarized when it interacts with the polymer of the pharmaceutical cylindrical container, i.e. with the electric field of the polymer. If the pharmaceutical cylindrical container comprises any structural defects, for example a bubble, the before mentioned polarization will not or at least not completely occur. Hence, by acquiring information about the polarization, i.e. "polarization information", of light that has been interacting with the pharmaceutical cylindrical container made of a glass or of a polymer, i.e. the detection beam, it is possible to detect defects of the pharmaceutical cylindrical container. Therefore, structural defects of pharmaceutical cylindrical containers made of a polymer can be fast and reliably detected with a simple constructed apparatus. A further advantage is that other non-structural defects like dirt on the surfaces of the pharmaceutical cylindrical container will not lead to a change in the electric field of the polymer so that structural defects are differentiated from other defects.

The term "pharmaceutical cylindrical container" refers in particular in the claims, preferably in the description to a cylindrical container, which can be used to store medical products, e.g. injection solutions or tablets. A pharmaceutical cylindrical container can be a syringe, a vial, an ampoule, a cartridge or any special article of tubing. The diameter of the pharmaceutical cylindrical containers being inspected by the apparatus according to the invention may be in the range of 4 mm to 80 mm, preferably 6 mm to 50 mm. Preferably, the apparatus comprises at least one pharmaceutical cylindrical container.

The term "longitudinal axis" refers in particular in the claims, preferably in the description to the line, especially the rotational axis that passes from the bottom to the top of the pharmaceutical cylindrical container. The diameter of the pharmaceutical cylindrical container to be measured can also be determined by the support device that supports the pharmaceutical cylindrical container on its lateral surface if the pharmaceutical cylindrical container is not present in the apparatus. For example, the support device exhibits three wheels surrounding and supporting the pharmaceutical cylindrical container and the diameter of the pharmaceutical cylindrical container to be measured is defined by the distance of the three wheels, when they are arranged in the inspection position.

Herein a "pharmaceutical cylindrical container" comprises at least a cylindrical part. A pharmaceutical cylindrical container like a syringe, a carpule or an ampule that comprises for example non-cylindrical ends is therefore a pharmaceutical cylindrical container. Further, the lateral surface of the pharmaceutical cylindrical container does not have to be smooth. The lateral surface can comprise grooves or ridges or ripples or any other structure. Further, the lateral surface can have a waved or any other shape as long as the pharmaceutical cylindrical container exhibits a longitudinal axis. The container is made of glass, e.g. borosilicate glass or aluminosilicate glass, or of a polymer, e.g. cyclic olefin copolymer (COC) or cyclic olefin polymer (COP). Preferably, the container is made of borosilicate glass, cyclic olefin copolymer (COC) or cyclic olefin polymer (COP). Most preferably, the container is made of cyclic olefin copolymer (COC). It should be noted that at least one pharmaceutical cylindrical container can be a part of an apparatus according to claim 1 and/or a part of the method according to claim 12 and/or a part of the bundle according to claim 14.

Herein, a bundle is a trading, loading or packaging unit for distribution of pharmaceutical cylindrical containers. For example, products usually of the same kind are combined as bundles when ordered together in retail or bundled in logistics. According to the invention, pharmaceutical cylindrical containers in the bundle can be separated by a spacer, for example a plastic or paper sheet or can be positioned in a holding device, for example a nest or tub, so that they are not in contact with each other during transport. Usually, but not necessarily, the bundle is at least partly covered by a plastic foil. Preferably, one bundle is encased in a plastic foil; more preferably, the bundle is encased in a plastic foil and all pharmaceutical cylindrical containers are sterilized, e.g. steam sterilized or sterilized by gamma rays. Due to economic reasons, the distance between two cylindrical bodies in a bundle is preferably less than 5 mm, more preferably less than 3 mm, more preferably less than 1 mm, more preferably less than 0.5 mm; most preferably to further reduce the size and weight of a bundle, the cylindrical bodies are in direct contact to each other. A bundle contains normally 10 or more, preferably 10 to 1000, more preferably 20 to 500, most preferably 40 to 250 pharmaceutical cylindrical containers. Examples of a bundle are the iQ™ platforms from SCHOTT AG, i.e. the ready to use platforms cartriQ™, adaptiQ®, or syriQ® from SCHOTT AG. One or more, preferably 10 to 50, bundles can be stacked on a pallet or packed in a further box for transport.

The term "polarized light" refers in particular in the claims, preferably in the description to a ray of light, preferably with a wavelength in the range of 1 nm and 100 $\mu$m, more preferably 10 nm and 10 $\mu$m, most preferably 400 nm to 800 nm, that comprises a linear polarization, a circular polarization, or an elliptical polarization being detectable by know methods and/or apparatuses.

The term "unpolarized light" refers in particular in the claims, preferably in the description to a ray of light, preferably with a wavelength in the range of 1 nm and 100 $\mu$m, more preferably 10 nm and 10 $\mu$m, most preferably 400 nm to 800 nm, that does not comprise a linear polarization or a circular polarization, or an elliptical polarization being detectable by known methods and/or apparatuses.

The term "polymer" refers in particular in the claims, preferably in the description to any kind of polymer, preferably to a polymer comprising molecules being arranged in long, at least essentially parallel structures, for example to cyclic olefin copolymer (COC). These long and essentially parallel structures arise for example if the pharmaceutical cylindrical container is produced by injection molding.

Acquiring polarization information of the detection beam is for example acquiring an image in which only light is considered which has a specific orientation, e.g. is linear polarized or all light except of light, which is linear polarized.

The expression "to acquire information of the detection beam other than the polarization of the detection beam" refers herein for example to the act of acquiring information of the wavelength of the detection beam, the intensity of the detection beam and/or to the act of collecting all light independent on the polarization, preferably to acquire information of the wavelength and the intensity of the detection beam.

The size of the defect herein refers to the longest dimension which is visible in the viewing plane, i.e. along a normal of the outer surface of the pharmaceutical cylindrical container. It is consciously accepted that three-dimensional defects may be longer.

## Apparatus

The present invention refers to an apparatus for inspecting a pharmaceutical cylindrical container made of a glass or of a polymer,
wherein the apparatus comprises a support device, a light emitting unit and a light receiving unit;
wherein the support device supports the pharmaceutical cylindrical container, such that the pharmaceutical cylindrical container is rotatable around its longitudinal axis;
wherein the light emitting unit comprises a light source and is configured to illuminate the pharmaceutical cylindrical container with an inspection beam; and
wherein the light receiving unit comprises a camera and is configured to receive a detection beam from the pharmaceutical cylindrical container and to acquire polarization information of the detection beam.

## Support device

According to the invention, the apparatus comprises a support device, wherein the support device supports the pharmaceutical cylindrical container, such that the pharmaceutical cylindrical container is rotatable around its longitudinal axis.

The support device can either support the pharmaceutical cylindrical container on its lateral surface and/or at the top or bottom of the pharmaceutical cylindrical container.

Preferably, the support device supports the pharmaceutical cylindrical container on its lateral surface and comprises at least two support wheels and a friction wheel, wherein the friction wheel is arranged such that the pharmaceutical cylindrical container being arranged on the support wheels is rotatable around its longitudinal axis by the friction wheel. Preferred support devices are described in the European patent applications 19200246.7 and 19200221.0, which are incorporated herein by reference. Herein, the lateral surface of the pharmaceutical cylindrical container is the outer surface of the cylindrical portion of the pharmaceutical cylindrical container. Preferably, there is not any direct contact of the apparatus to the base and top of the pharmaceutical cylindrical container. By laying the pharmaceutical cylindrical container with its lateral surface horizontally on the support wheels during the inspection, it is possible to shine light through at least almost the whole pharmaceutical cylindrical container. Hence, it is possible to inspect the pharmaceutical cylindrical container at least almost without any shadow if the pharmaceutical cylindrical container is held only on its lateral surface by the holding means and the friction wheel during the measurement. It is even possible that the top and/or the bottom portion of the pharmaceutical cylindrical container can be inspected, when the pharmaceutical cylindrical container is held only on its lateral surface by the holding means and the friction wheel during the measurement.

## Light emitting unit

According to the invention, the apparatus comprises a light emitting unit, wherein the light emitting unit comprises a light source and is configured to illuminate the pharmaceutical cylindrical container with an inspection beam.

According to a preferred embodiment, the light source is a gas-discharge lamp, a light-emitting diode or a laser, preferably a light-emitting diode or a laser and/or, preferably and, a UV-light source or a visible light source. Using a UV-light source together with a visible light source has the advantage that two different inspection beams are provided such that two detections beams can be acquired at the same time. By analyzing two detection beams simultaneously, the inspection of the pharmaceutical cylindrical container is achievable in a very short time.

In general, the light emitting unit can emit polarized or unpolarized light. Preferably, the light emitting unit emits unpolarized light. More preferably, the light emitting unit comprises at least one light source that emits unpolarized light. Hence, the inspection beam can be generated easily.

In a preferred embodiment, the light emitting unit comprises at least one light source that emits polarized light and at least one depolarizer being arranged between the light source and the pharmaceutical cylindrical container. This has the advantage that a light source emitting polarized light can be arranged, wherein the inspection beam will be unpolarized by the depolarizer. In a preferred embodiment the apparatus comprises a further light emitting unit. For example, the apparatus comprises one light emitting unit that emits linear polarized light and a further light emitting unit that emits unpolarized light.

## Filter / (de-)polarizer / wave plate

In general, no further filter, (de-)polarizer or wave plate are necessary. However, if the apparatus comprises a filter or (de-)polarizer, it is possible to use easier and cheaper light emitting units or light receiving units and, in addition, the information of the acquired polarization information is more accurate.

Thus, preferably the light emitting unit comprises:

i) a polarizer, preferably wherein the polarizer is a polarizer that polarizes by Fresnel reflection or a birefringent polarizer or a thin film polarizer or a wire-grid polarizer, or

ii) a depolarizer, preferably wherein the depolarizer is a Cornu depolarizer or a Lyot depolarizer or a wedge depolarizer or a time-variable depolarizer, wherein the polarizer or the depolarizer is arranged between the light source and the pharmaceutical cylindrical container; and/or

iii) a wave plate, preferably wherein the wave plate is a half-wave plate, a quarter-wave plate or full-wave plate or a sensitive-tint plate, wherein the wave plate is arranged between the pharmaceutical cylindrical container and the light source.

Preferably, the light receiving unit comprises:

iv) a polarizer, preferably wherein the polarizer is a polarizer that polarizes by Fresnel reflection or a birefringent polarizer or a thin film polarizer or a wire-grid polarizer; and/or

v) a wave plate, preferably wherein the wave plate is a half-wave plate; a quarter-wave plate or full-wave plate or a sensitive-tint plate; and

wherein the polarizer and/or the wave plate is/are arranged between the pharmaceutical cylindrical container and the camera, and preferably the wave plate is arranged between the pharmaceutical cylindrical container and the polarizer.

More preferably, the apparatus comprises above i and iii; ii and iii; i and iv; i and v; ii and iv; ii and v; i, iii and iv; ii, iii and iv; i, iii and v; ii, iii and v; or ii, iii, iv and v.

Arranging a polarizer between the pharmaceutical cylindrical container and the camera has the advantage that polarization information of the detection beam can be acquired with easy means since only light of a specific polarization can pass the polarizer while blocking light rays of other polarization and/or unpolarized light rays.

A wave plate is preferably either arranged between the pharmaceutical cylindrical container and the light source or between the pharmaceutical cylindrical container and the camera of the light receiving unit. If a wave plate is arranged between the pharmaceutical cylindrical container and the light source, preferably the wave plate is arranged between the pharmaceutical cylindrical container and the polarizer or the depolarizer. Preferably, a wave plate is arranged between the pharmaceutical cylindrical container and the light receiving unit; more preferably, a quarter-wave plate is arranged between the pharmaceutical cylindrical container and the light receiving unit; and more preferably, a quarter-wave plate is arranged between the pharmaceutical cylindrical container and the polarizer.

Preferably, the apparatus comprises one or more interference filter, wherein the interference filter is arranged between the pharmaceutical cylindrical container and the light source or is arranged between the pharmaceutical cylindrical container and the camera. Preferably, the interference filter is a cut-off filter cutting of light having a wavelength below or above, preferably below, 400 nm. By using such a filter, various light sources can be used and the production costs of the apparatus can be reduced. Preferably, the apparatus comprises an interference filter, wherein the interference filter is arranged between the pharmaceutical cylindrical container and the light source and wherein the interference filter is a cut-off filter cutting of light having a wavelength below or above, preferably below, 400 nm.

Light receiving unit

According to the invention, the apparatus comprises a light receiving unit, wherein the light receiving unit comprises a camera and is configured to receive a detection beam from the pharmaceutical cylindrical container and to acquire polarization information of the detection beam.

Preferably, the light receiving unit comprises further cameras. Preferably, the centerline of the camera(s) does not cross the support device, e.g. a wheel of the support device. More preferably, the centerline of the camera(s) do(es) not cross anything before the centerline reaches the pharmaceutical cylindrical container. Preferably, at least one camera acquires an image of at least the whole cylindrical part of the pharmaceutical cylindrical container.

The total amount of cameras is not particularly limited. The amount of cameras being arranged depends on the size of the pharmaceutical cylindrical container. As more cameras are used, as more images can be obtained within one time interval. For this reason, each light receiving unit comprises preferably 2 or more, more preferably 3 or more, more preferably 5 or more, most preferably 10 or more cameras. However, if the light receiving unit comprises too many cameras this distance of each camera to the pharmaceutical cylindrical container highly increases. Thus, the light receiving unit comprises preferably 25 or less, more preferably 20 or less, more preferably 15 or less, more preferably 10 or less, most preferably 5 or less cameras. It is advantageous if the light receiving unit comprises 8 to 18 cameras since the whole pharmaceutical cylindrical container can be inspected whereas the light receiving unit(s) need(s) not so much space. A light receiving unit comprising 11 to 14 cameras is very advantageous because a good inspection of the whole pharmaceutical cylindrical container is still possible with a minimum of space needed for the light receiving unit.

In addition, the light receiving unit preferably comprises one camera that acquires:

- an image of the bottom of the pharmaceutical cylindrical container; and/or
- an overview image of the whole pharmaceutical cylindrical container and/or
- an image of a sealing surface of the pharmaceutical cylindrical container and/or
- an image of a shoulder of the pharmaceutical cylindrical container and/or

- an image of the inside of an opening of the pharmaceutical cylindrical container and/or
- an image of the outside of an opening of the pharmaceutical cylindrical container and/or
- an image of the neck of the pharmaceutical cylindrical container.

The pixel and sensor size and the amount of pixels of the camera(s) are not particularly limited. However, if the pixel and the sensor size and the number of pixels is too small, the image noise increases and the image sharpness decreases. If the sensor size is too big, costs for the camera(s) increase excessively and also the size of the camera(s) increase making it difficult to install it/them in the apparatus. In addition, as bigger the camera(s) as more difficult it is to arrange the cameras around the container. For this reason, preferably one or more of the camera(s), preferably all, exhibit the following properties:

i) the pixel size is 3 $\mu$m * 3 $\mu$m or more and 15 $\mu$m * 15 $\mu$m or less, preferably 4 $\mu$m * 4 $\mu$m or more and 10 $\mu$m * 10 $\mu$m or less, more preferably 5 $\mu$m * 5 $\mu$m or more and 7 $\mu$m * 7 $\mu$m or less;
ii) the sensor size is 3 mm * 5 mm or more and 15 * 20 mm+ or less, preferably 4 mm * 7 mm or more and 10 * 15 mm or less, more preferably 5 mm * 8 mm or more and 9 * 12 mm or less; and/or
iii) the number of pixels is 1.5 or more and 5.0 or less megapixels, preferably 1.8 or more and 3.5 or less megapixels, more preferably 2.0 or more and 3.0 or less megapixels.

More preferably, the camera(s) exhibit the above described properties i; ii; iii; i+ii; i+iii; or ii+iii, and more preferably the camera(s) exhibit the above described properties i+ii+iii; most preferably all cameras of the light receiving unit are the same cameras and exhibit the above described properties i+ii+iii.

The distance of the cameras to the pharmaceutical cylindrical container is not particular limited. However, if the distance is too long, the quality of the images decreases and the needs of the camera(s) increase(s). If the distance is too small, it is not possible to arrange many cameras. Thus, preferably, the distance between the camera(s) and the support device is preferably 50 mm or more and 600 or less, more preferably 80 mm to 450 mm, more preferably 100 mm to 350 mm. More preferably, in the following equation:

$$x = a\,/\,b$$

wherein a is the number of pixels of the camera(s) and b is the distance between the camera(s) and support device in mm; x is 1 * 10$^4$ [mm$^{-1}$] or more and 5 * 10$^5$ [mm$^{-1}$] or less, preferably 5 * 10$^4$ [mm$^{-1}$] or more and 3 * 10$^5$ [mm$^{-1}$] or less, more preferably 1 * 10$^5$ [mm$^{-1}$] or more

and 2 * $10^5$ [mm$^{-1}$] or less. If x is in the above described range, it is possible to detect even very small defects.

In a preferred embodiment, the light receiving unit is configured to measure a first linear polarized light beam and a second linear polarized light beam, wherein the plane of polarization of the first linear polarized light beam and the plane of polarization of the second linear polarized light beam intersect at an angle of 10 to 170°, preferably 45° or 90°, more preferably 90°.

According to a preferred embodiment, the camera is a polarization camera. By providing a polarization camera information about the polarization of the detection beam can be acquired very easily. Examples of a polarization cameras are cameras having the polarization image sensor IMX250MZR (Mono) or IMX250MYR (Color) from Sony.

In a preferred embodiment, the light receiving unit is configured to receive a detection beam from the pharmaceutical cylindrical container and is further configured to acquire information of the detection beam other than the polarization of the light. By acquiring two images, one independent of the polarization of the light and one with polarization information of the detection beam, it is possible to detect and characterize defects in an faster and more reliably manner. For example, if the light receiving unit acquires a first image of a detection beam being reflected from the pharmaceutical cylindrical container, the detection beam can be linear polarized if the container comprises no defect. If, for example, a filter/polarizer is arranged between the pharmaceutical cylindrical container and the light receiving unit, which blocks linear polarized light, defects can be detected very accurate, which penetrate the outer surface of the pharmaceutical container, e.g. defects on the outer surface and wall penetrating defects. If this first image is compared with a second image showing all defects, e.g. a simple bright field image using a normal camera and no filter, wherein the light transmits the whole wall of the pharmaceutical cylindrical container, defects can be characterizes very easy by just comparing the two images and no further effort is necessary. This speeds up the characterization of a defect. Thus, preferably the apparatus comprises a light emitting unit und and a light receiving unit, which are configured to acquire a bright field image independent of the polarization of the light, i.e. a second image. With other words, the light receiving unit can comprise at least one polarization camera for acquiring a first image and at least one conventional camera for acquiring a second image. To obtain an entire evaluation, it is advantageous that the pharmaceutical cylindrical container can be rotated around its longitudinal axis.

According to a preferred embodiment, the light receiving unit is configured to measure the intensity and/or wavelength of the detection beam. This has the advantage that further defects, which result in a decrease of the intensity can be detected. Preferably, at least one camera is configured to measure the intensity and/or wavelength of the detection beam and one camera is configured to receive a detection beam from the pharmaceutical cylindrical container and acquiring polarization information of the detection beam without measuring the intensity and/or wavelength of the detection beam.

Preferably, the light receiving unit is configured to receive a detection beam from the pharmaceutical cylindrical container and to acquire polarization information of the detection beam; and is configured:

   i) to measure a first linear polarized light beam and a second linear polarized light beam, wherein the plane of polarization of the first linear polarized light beam and the plane of polarization of the second linear polarized light beam intersect at an angle of 10 to 170°, preferably 45° or 90°, more preferably 90°; and/or
   ii) to receive a detection beam from the pharmaceutical cylindrical container and acquires information of the detection beam independent of the polarization of the light; and/or
   iii) to measure the intensity and/or wavelength of the detection beam.

More preferably, the light receiving unit is configured according to above i+ii; i+iii; ii+iii; or i+ii+iii. The information can be obtained either by one camera or by more than one camera. Preferably, all information of the detection beam is collected by 1 to 3, preferably 1 to 2, more preferably 1 camera(s). A skilled person will understand that the light receiving unit has to be adapted such that the polarization information of two detection beams, especially comprising different wavelength, can be acquired. In addition, a skilled person will understand that the light receiving unit has to be adapted such that all necessary polarization information can be acquired.

Arrangement

The arrangement of the light emitting unit and/or the light receiving unit is not particularly limited as long as the receiving unit can receive a detection beam from the pharmaceutical cylindrical container and can acquire polarization information of the detection beam.

According to a preferred embodiment, the light emitting unit and/or, preferably and, the light receiving unit are arranged such that the light being reflected by the pharmaceutical cylindrical container defines the detection beam. This has the advantage that the detection beam comprises a relatively high intensity. Alternatively or additionally, the light emitting unit and/or, preferably and, the light receiving unit is/are arranged such that the light that transmits through the pharmaceutical cylindrical container defines the detection beam. An advantage of using the transmitted light is that the two sidewalls of the container can be inspected at the same time. It should be noted that it is possible to choose the reflected light as a first detection beam and the transmitted light as a second detection beam. By analyzing the polarization of a first and a second detection beam very small defects, such as bubbles, can be detected.

Preferably, the apparatus comprises a pharmaceutical cylindrical container and wherein the light emitting unit and/or the light receiving unit are arranged such that the following equation is fulfilled:

$$\alpha = \beta = \arctan{(n)};$$

wherein $\alpha$ is the angle between the centerline of the light source and a normal N of the surface of the pharmaceutical cylindrical container;
wherein $\beta$ is the angle between the centerline of the camera and the normal N of the surface of the pharmaceutical cylindrical container;
wherein n is the refractive index of the glass or of the polymer of the pharmaceutical cylindrical container.

According to a preferred embodiment, the light is emitted onto the pharmaceutical cylindrical container such that the detection beam intersects with the centerline of the camera at an angle in the range of 0° to 30°, preferably 0° to 15°. Thus, the intensity of the detection beam is increased.

Control unit

According to a preferred embodiment, the apparatus comprises a control unit for controlling the support device, especially the friction wheel of the support device, the light emitting unit, and the light receiving unit. By providing a control unit, the activation/deactivation of the light receiving unit and/or of the light emitting unit and/or of the friction wheel can be controlled such that a visualization of the whole pharmaceutical cylindrical container is achieved with a high stroke, such that a maximum of pharmaceutical cylindrical containers can be inspected in a minimum of time. Preferably, the control unit is configured to measure one pharmaceutical cylindrical container in 0.3 to 10 seconds, more preferably in 0.5 to 8 seconds, more preferably in about 1 second. These short measurement times can be achieved by an apparatus according to the invention due to excellent coordination of the angles of the light sources and the camera to each other, as well as the specific type of sequential measurement (see below).

In a preferred embodiment, the control unit is configured to rotate the cylindrical body 360° around its longitudinal axis. Hence, the light receiving unit can acquire images of the whole pharmaceutical cylindrical container such that defects can be detected independent from their location on or within the material of the pharmaceutical cylindrical container.

According to another embodiment, the control unit is configured to rotate the cylindrical body in increments between 0.5° and 4°, preferably 0.5° and 3.5°, more preferably 1° and 3°, most preferably 2°. Rotating the pharmaceutical cylindrical container with the before mentioned increments is advantageous because sufficient images can be acquired to create a virtual 3D image of the pharmaceutical cylindrical container and the cameras have enough time to take the pictures using different illuminations at the same position. Based on this 3D image it can be determined whether the pharmaceutical cylindrical container fulfills the quality standards.

In a preferred embodiment, the control unit is configured to rotate the cylindrical body in between the image acquisitions.

In a preferred embodiment, the control unit is configured to adjust the activation/deactivation of each camera of the light receiving unit and the light emitting unit based on the speed of the friction wheel. By such a configuration, the apparatus can be operated at any speed and the speed can variate within the measurement of one pharmaceutical cylindrical container. This might be necessary to adjust the speed of the apparatus to varying production speeds.

In a preferred embodiment, the control unit is configured:

> i) to measure one pharmaceutical cylindrical container in 0.3 to 10 seconds, more preferably in 0.5 to 8 seconds, more preferably in about 1 second;
> ii) to rotate the cylindrical body 360° around its longitudinal axis;
> iii) to rotate the cylindrical body in increments between 0.5° and 4°, preferably 0.5° and 3.5°, more preferably 1° and 3°, most preferably 2°;
> iv) to rotate the cylindrical body in between the image acquisitions; and/or
> v) to adjust the activation/deactivation of each camera of the light receiving unit and of each light emitting plane of the light emitting unit based on the speed of the friction wheel.

In a further preferred embodiment the control unit is configured to fulfill the above properties i; ii; iii; iv; v; i+ii; i+iii; i+iv; i+v; ii+iii; ii+iv; ii+v; iii+iv; iii+v; iv+v; i+ii+iii; i+ii+iv; i+ii+v; i+iii+iv; i+iii+v; i+iv+v; ii+iii+iv; ii+iii+v; ii+iv+v; iii+iv+v; i+ii+iii+iv; i+ii+iii+v; i+ii+iv+v; i+iii+iv+v; or i+ii+iii+iv+v.

After images at all positions of the rotating pharmaceutical cylindrical container have been obtained, a computer fits together all images to obtain a 3D image of the pharmaceutical cylindrical container. In this 3D image, it is possible to differ between the different kinds of defects and it is also possible to determine the position and orientation of the defect. This is possible due to the specific arrangement of the camera and the light sources around the pharmaceutical cylindrical container as described above. If the apparatus comprises more cameras and/or more light sources as described above, a complete image of the pharmaceutical cylindrical container, including the non-cylindrical ends of the pharmaceutical cylindrical container, can be obtained. The minimum size of the defects, which can be detected with the above described apparatus depends on the distance, amount of pixels, sensor size, etc. of the camera. With cameras according to the invention, defects having a size of 16 μm or more can be detected accurately.

Control device

In a further preferred embodiment, the apparatus comprises a control device which is configured to disregard a pharmaceutical cylindrical container from further processing, if a defect at a pharmaceutical cylindrical container is detected on the outer surface having a size of 40 mm or more; and/or a wall penetrating defect having a size of 0.5 mm or more, preferably 0.3 mm or more, preferably 0.1 mm or more, more preferably 0.05 mm or more. The control device is preferably included in the control unit.

A further embodiment provides an apparatus for inspecting a pharmaceutical cylindrical container made of glass or of a polymer, wherein the apparatus is configured such that the pharmaceutical cylindrical container is inspected in one second or less, preferably 0.9 seconds or less, preferably 0.8 seconds or less, more preferably in 0.6 seconds to 0.9 seconds, preferably in 0.7 seconds to 0.8 seconds; and/or
wherein the apparatus is configured such that (a) defect(s) on the outer surface having a size of 40 mm or more, preferably 30 mm or more, more preferably 20 mm or more, more preferably 10 mm or more, more preferably 2 mm or more, is/are detectable; and/or
wherein the apparatus is configured such that (a) wall penetrating defect(s) having a size of 0.5 mm or more, preferably 0.3 mm or more, preferably 0.1 mm or more, more preferably 0.05 mm or more, is/are detectable.

Method

The present invention refers to a method for inspecting a pharmaceutical cylindrical container made of a glass or of a polymer, preferably by using an apparatus according to any one of the preceding claims, comprising the following steps:

- illuminating the pharmaceutical cylindrical container with an inspection beam;
- receiving at least one detection beam from the pharmaceutical cylindrical container with a light receiving unit; and
- acquiring polarization information of the detection beam.

In a preferred embodiment, a pharmaceutical cylindrical container is disregarded from further processing, if a defect on the outer surface having a size of 40 mm or more, preferably 30 mm or more, more preferably 20 mm or more, more preferably 10 mm or more, more preferably 2 mm or more, and/or a wall penetrating defect having a size of 0.5 mm or more, preferably 0.3 mm or more, preferably 0.1 mm or more, more preferably 0.05 mm or more, is identified by analyzing the at least one image acquired of the pharmaceutical cylindrical container. This has the advantage that high quality standards regarding the pharmaceutical cylindrical containers are fulfilled, for example quality standards like they are defined for pharmaceutical cylindrical containers like syringes, cartridges or ampoules.

In a preferred embodiment of the described method, the pharmaceutical cylindrical container is disregarded from further processing when the inspection beam is at least partly unpolarized.

Bundle

Furthermore, the invention refers to a bundle of pharmaceutical cylindrical container made of glass or of a polymer, wherein the bundle comprises 10 or more pharmaceutical cylindrical containers; and wherein each pharmaceutical cylindrical container exhibits no defect on the outer surface having a size of 40 mm or more; and/or, preferably and, wherein each pharmaceutical cylindrical container exhibits no wall penetrating defect having a size of 0.5 mm or more, preferably 0.3 mm or more, preferably 0.1 mm or more, more preferably 0.05 mm or more.

A bundle having the described extraordinary quality can be obtained by inspecting the bundle by an apparatus according to an embodiment of the invention and/or a method according to an embodiment of the invention. Thus, preferably the pharmaceutical cylindrical container are inspected by an apparatus according to an embodiment of the invention and/or a method according to an embodiment of the invention.

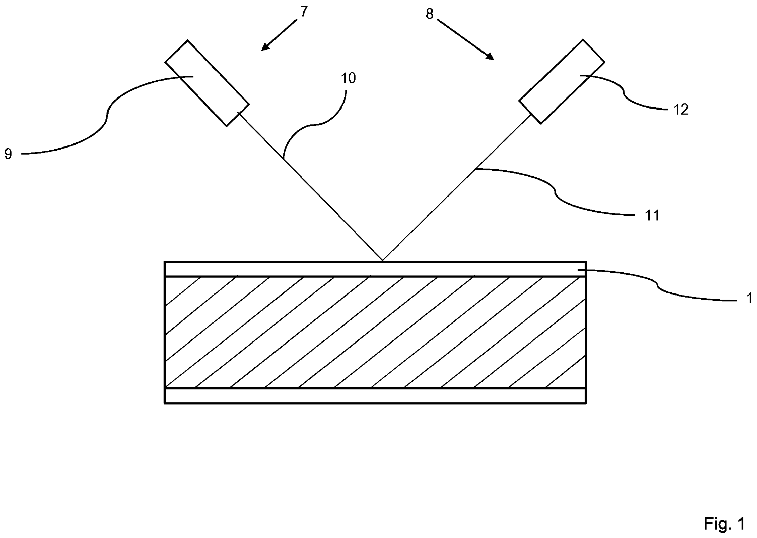

There are several ways how to design and further develop the teaching of the present invention in an advantageous way. To this end, it is to be referred to the patent claims subordinate to patent claims 1, 12 and 14 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained in Fig. 1 to 7.

Fig. 1     shows a schematic side view of an apparatus according to another embodiment,
Fig. 2     shows a schematic side view of an apparatus according to another embodiment,
Fig. 3     shows a schematic side view of an apparatus according to another embodiment,
Fig. 4     shows a schematic side view of an apparatus according to another embodiment,
Fig. 5     shows a schematic side view of an apparatus according to another embodiment,

Fig. 6    shows a schematic side view of an apparatus according to another embodiment,

Fig. 7    shows a schematic block diagram of a method according to an embodiment.

In the following description of embodiments, the same reference numeral designate similar components.

According to Fig. 1 the apparatus comprises a light emitting unit 7 and a light receiving unit 8. The light emitting unit 7 comprises a light source 9 for illuminating the pharmaceutical cylindrical container 1 with an inspection beam 10. The inspection beam 10 can comprise no polarization. Due to the reflection on the surface, the detection beam 11 will be polarized, if the container 1 comprises no defect. Therefore, the light receiving unit 8 acquires polarization information of the detection beam 11 for detecting a defect on the outer surface of the pharmaceutical cylindrical container 1, for example an air bubble. In this embodiment, the light receiving unit 8 can comprise a polarization camera 12 for acquiring the polarization information of the detection beam 11. The arrangement of the light source and the camera is in such a manner that the illumination and detection takes place in the Brewster's angle. The pharmaceutical cylindrical container 1 is rotatable around 360° during the measurement.

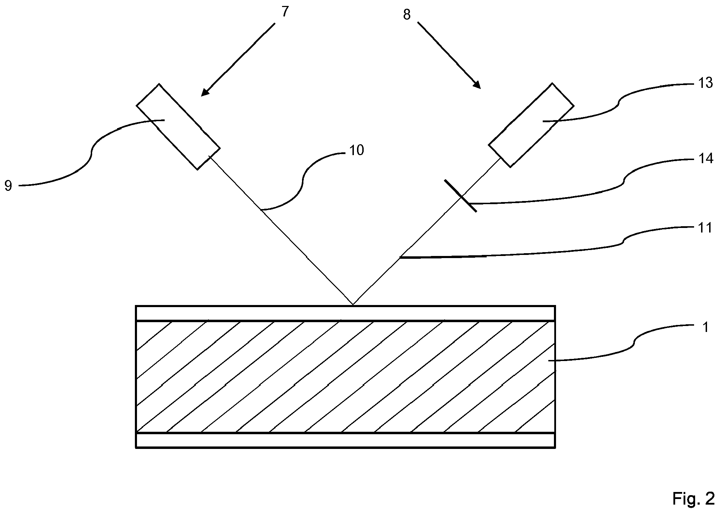

The apparatus shown in Fig. 2 comprises a light emitting unit 7 and a light receiving unit 8. The light receiving unit 8 comprises a camera 13 and a polarizer 14. The polarizer 14 serves to acquire information about the polarization of the detection beam 11 since only light of a specific polarization can pass through the polarizer 14. Hence, if the pharmaceutical cylindrical container 1 comprises a defect, such that the detection beam 11 is not polarized, the polarizer 14 blocks the not polarized detection beam 11. Since (almost) no light arrives at the camera 13, the camera 13 will detect (almost) no light. The further features of the apparatus shown in Fig. 2 corresponds to the apparatus shown in Fig. 1.

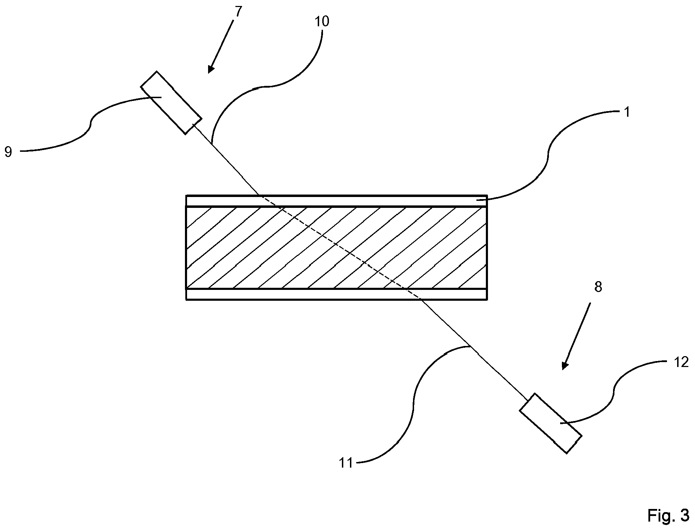

The apparatus in Fig. 3 comprises a light emitting unit 7 and a light receiving unit 8. In this embodiment, the light that transmits through the pharmaceutical cylindrical container 1 defines the detection beam 11. Further, the apparatus shown in Fig. 3 corresponds to the embodiment shown in Fig. 1.

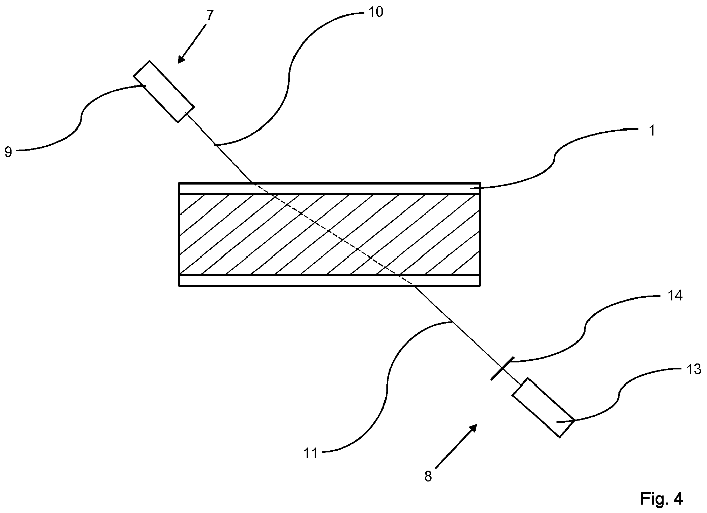

Fig. 4 shows an embodiment of an apparatus for inspecting a pharmaceutical cylindrical container 1. As already described with regard to Fig. 2, the light receiving unit 8 comprises a camera 13 and a polarizer 14, whereby the light that transmits through the pharmaceutical cylindrical container 1 defines the detection beam 11.

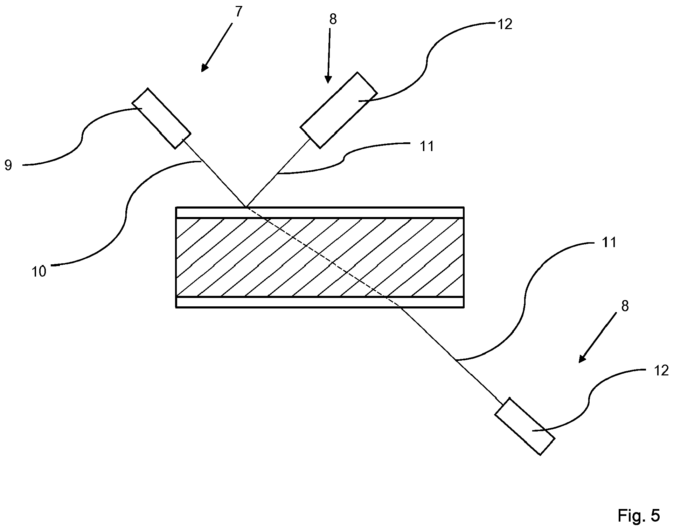

Fig. 5 shows another embodiment of an apparatus. In this embodiment, the light receiving unit 8 comprises two polarization cameras 12, 12'. The first polarization camera 12 serves to detect the first detection beam 11, being defined by the light that is reflected by the pharmaceutical cylindrical container 1. The second polarization camera 12' serves to detect the second detection beam 11', being defined by the light that transmits through the pharmaceutical cylindrical container 1. A skilled person understands that at least one of the polarization cameras 12, 12' can be substituted by an arrangement comprising a light sensor and a polarizer as shown in fig. 2 and 4. Furthermore, the apparatus can comprise a polarization camera 12 and a camera 12' which is not a polarization camera but a conventional camera. By comparing the images acquired by the polarization camera and the conventional camera, defects can be detected very easily.

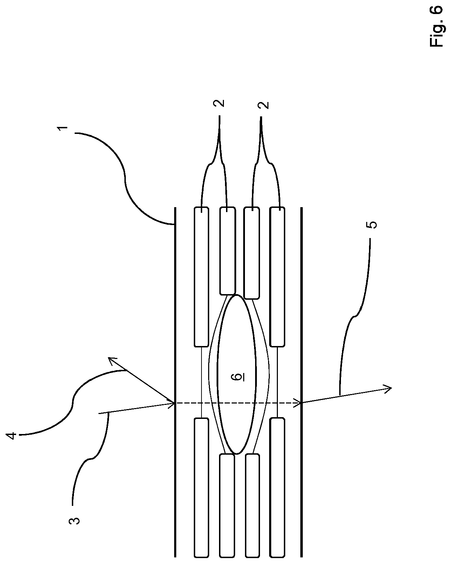

Fig. 6 shows a schematic cross section of a pharmaceutical cylindrical container 1 made of a polymer and produced by injection molding, wherein the pharmaceutical cylindrical container 1 comprises a defect 6. In this embodiment, the defect 6 is an air bubble, which can typically occur after an injection molding process. Due to the defect 6 the arrangement of the molecules 2 is disrupted such that the electrical field E of the pharmaceutical cylindrical container 1 is at least decreased. As can be seen, the incident light ray 3 is partly reflected, i.e. a reflected light ray 4 occurs, and partly transmits through the pharmaceutical cylindrical container 1, i.e. a transmitted light ray 5 occurs. If the incident light ray 3 comprises a linear polarization, the transmitted light ray 5 will have linear polarization, however the plane of polarization has been changed. Hence, by acquiring polarization information of the light ray 5, it is possible to detect a defect 6, like an air bubble or any other kind of defect, that will decrease or extinguish the electrical field E of the pharmaceutical cylindrical container 1 made of a glass or of a polymer.

Furthermore it should be noted that in all of the described embodiment of Fig. 1 to 6 the light emitting unit 7 can comprise several light sources, for example two light sources, such that the pharmaceutical cylindrical container 1 can be illuminated with two inspection beams, preferably comprising different wavelength, for example a first detection beam defined by UV-light and a second detection beam defined by visible light. A skilled person will understand that the light receiving unit 8 will have to be adapted accordingly, to acquire information about the polarization of these at least two different detection beams.

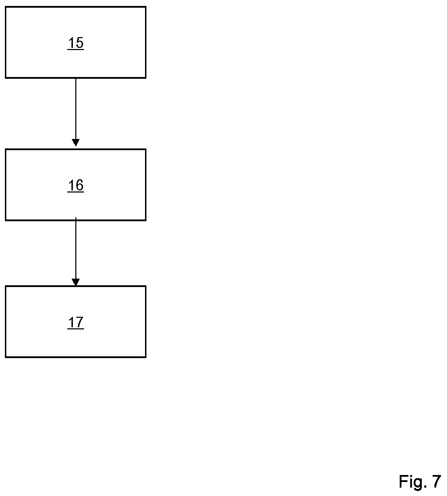

Fig. 7 shows a block diagram of an embodiment of the method. The method serves to inspecting a pharmaceutical cylindrical container made of a glass or of a polymer. In a first step 15 the pharmaceutical cylindrical container is illuminated with an inspection beam, for example of unpolarized light. In a second step 16, at least one detection beam from the pharmaceutical cylindrical container is received by a light receiving unit and analyzed with regard to its polarization. Further steps 17 can be performed, for example a pharmaceutical cylindrical container can be disregarded from further processing when the detection beam is at least partly unpolarized.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**List of reference signs**

| | |
|---|---|
| 1 | pharmaceutical cylindrical container |
| 2 | polymer molecules |
| 3 | light ray (incident) |
| 4 | light ray (reflected) |
| 5 | light ray (transmitted) |
| 6 | defect |
| 7 | light emitting unit |
| 8 | light receiving unit |
| 9 | light source |
| 10 | inspection beam |
| 11, 11' | detection beam |
| 12, 12' | polarization camera |
| 13 | camera |
| 14 | polarizer |
| 15 | first step |
| 16 | second step |
| 17 | further step |

**Claims**

1. Apparatus for inspecting a pharmaceutical cylindrical container made of a glass or of a polymer, wherein the apparatus comprises a support device, a light emitting unit and a light receiving unit; wherein the support device supports the pharmaceutical cylindrical container, such that the pharmaceutical cylindrical container is rotatable around its longitudinal axis; wherein the light emitting unit comprises a light source and is configured to illuminate at least a part of the pharmaceutical cylindrical container with an inspection beam; and wherein the light receiving unit comprises a camera and is configured to receive a detection beam from the pharmaceutical cylindrical container and to acquire polarization information of the detection beam.

2. Apparatus according to claim 1, wherein the light source is a gas-discharge lamp and/or a light-emitting diode and/or a laser.

3. Apparatus according to any one of the preceding claims, wherein the light emitting unit comprises:

   a polarizer, preferably a polarizer that polarizes by Fresnel reflection or a birefringent polarizer or a thin film polarizer or a wire-grid polarizer, or a depolarizer, preferably a Cornu depolarizer or a Lyot depolarizer or a wedge depolarizer or a time-variable depolarizer, and wherein the polarizer or the depolarizer is/are arranged between the light source and the pharmaceutical cylindrical container; and/or a wave plate, preferably a half-wave plate, a quarter-wave plate or full-wave plate or a sensitive-tint plate, and wherein the wave plate is arranged between the pharmaceutical cylindrical container and the light source.

4. Apparatus according to any one of the preceding claims, wherein the light receiving unit comprises:

   a polarizer, preferably a polarizer that polarizes by Fresnel reflection or a birefringent polarizer or a thin film polarizer or a wire-grid polarizer, and/or a wave plate, preferably a half-wave plate, a quarter-wave plate or a full-wave plate or a sensitive-tint plate, and wherein the polarizer and/or the wave plate is/are arranged between the pharmaceutical cylindrical container and the camera, and preferably the wave plate is arranged between the pharmaceutical cylindrical container and the polarizer.

5. Apparatus according to any one of the preceding claims, wherein the light receiving unit is configured to measure a first linear polarized light beam and a second linear polarized light beam, wherein the plane of polarization of the first linear polarized light beam and the plane of polarization of the second linear polarized light beam intersect at an angle of 10 to 170°, preferably 45° or 90°, more preferably 90°.

6. Apparatus according to any one of the preceding claims, wherein the camera is a polarization camera.

7. Apparatus according to any one of the preceding claims, wherein the light receiving unit is configured to receive a detection beam from the pharmaceutical cylindrical container and further configured to acquire information of the detection beam other than the polarization of the detection beam.

8. Apparatus according to any one of the preceding claims, wherein the light receiving unit is configured to measure the intensity and/or the wavelength of the detection beam.

9. Apparatus according to any one of the preceding claims, wherein the light emitting unit and/or the light receiving unit are arranged such that the light being reflected by the pharmaceutical cylindrical container defines the detection beam.

10. Apparatus according to any one of the preceding claims, wherein the light emitting unit and/or the light receiving unit are arranged such that the light that transmits through the pharmaceutical cylindrical container defines the detection beam.

11. Apparatus according to any one of the preceding claims, wherein the apparatus comprises a pharmaceutical cylindrical container and wherein the light emitting unit and/or the light receiving unit are arranged such that the following equation is fulfilled:

$$\alpha = \beta = \arctan(n);$$

wherein $\alpha$ is the angle between the centerline of the light source and a normal N of the lateral surface of the pharmaceutical cylindrical container;
wherein $\beta$ is the angle between the centerline of the camera and the normal N of the lateral surface of the pharmaceutical cylindrical container;
wherein n is the refractive index of the glass or of the polymer of the pharmaceutical cylindrical container.

12. Method for inspecting a pharmaceutical cylindrical container made of a glass or of a polymer, preferably by using an apparatus according to any one of the preceding claims, comprising the following steps:

- illuminating the pharmaceutical cylindrical container with an inspection beam;
- receiving at least one detection beam from the pharmaceutical cylindrical container with a light receiving unit; and
- acquiring polarization information of the detection beam.

13. Method according to any one of the preceding claims, wherein a pharmaceutical cylindrical container is disregarded from further processing, if a defect on the outer surface having a size of 40 mm or more, preferably 30 mm or more, more preferably 20 mm or more, more preferably 10 mm or more, more preferably 2 mm or more, and/or a wall penetrating defect having a size of 0.5 mm or more, preferably 0.3 mm or more, preferably 0.1 mm or more, more preferably 0.05 mm or more, is identified by analyzing the at least one image acquired of the pharmaceutical cylindrical container.

14. A bundle of pharmaceutical cylindrical container made of glass or of a polymer, wherein the bundle comprises 10 or more pharmaceutical cylindrical containers; and wherein each pharmaceutical cylindrical container exhibits no defect on the outer surface having a size of 40 mm or more, preferably 30 mm or more, more preferably 20 mm or more, more preferably 10 mm or more, more preferably 2 mm or more; and/or
wherein each pharmaceutical cylindrical container exhibits no wall penetrating defect having a size of 0.5 mm or more, preferably 0.3 mm or more, preferably 0.1 mm or more, more preferably 0.05 mm or more.

15. The bundle according to claim 14,
wherein the pharmaceutical cylindrical container is made of borosilicate glass, aluminosilicate glass, cyclic olefin copolymer (COC) or cyclic olefin polymer (COP), preferably borosilicate glass or cyclic olefin copolymer (COC), more preferably cyclic olefin copolymer (COC).

Fig. 1

Fig. 2

Fig. 3

Fig. 4

Fig. 5

Fig. 6

```
┌──────────────────┐
│                  │
│        15        │
│                  │
└──────────────────┘
          │
          ▼
┌──────────────────┐
│                  │
│        16        │
│                  │
└──────────────────┘
          │
          ▼
┌──────────────────┐
│                  │
│        17        │
│                  │
└──────────────────┘
```

Fig. 7

Europäisches
Patentamt
European
Patent Office
Office européen
des brevets

# EUROPEAN SEARCH REPORT

**Application Number**

EP 20 15 3308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/049390 A1 (VEILLON ROMAIN MARIE [BE]) 14 February 2019 (2019-02-14) * the whole document * | 1-15 | INV. G01N21/90 G01N21/95 |
| A | US 5 444 535 A (AXELROD NORMAN N [US]) 22 August 1995 (1995-08-22) * column 6, lines 22-51; figures 5A, , 9 * * column 7, lines 34-68 * | 9 | |
| T | Anonymous: "Brewster's angle - Wikipedia", , 24 February 2016 (2016-02-24), XP055700228, Retrieved from the Internet: URL:https://en.wikipedia.org/w/index.php?title=Brewster's_angle&oldid=706602222 [retrieved on 2020-06-02] * the whole document * | 11 | |
| T | Anonymous: "Brewster-Winkel - Wikipedia", , 3 June 2020 (2020-06-03), XP055700739, Retrieved from the Internet: URL:https://de.wikipedia.org/wiki/Brewster-Winkel [retrieved on 2020-06-03] * the whole document * | 11 | **TECHNICAL FIELDS SEARCHED (IPC)** G01N |

The present search report has been drawn up for all claims

| Place of search | Date of completion of the search | Examiner |
|---|---|---|
| Berlin | 5 June 2020 | Prasse, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 3308

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2020

| Patent document cited in search report | Publication date | Patent family member(s) | Publication date |
|---|---|---|---|
| US 2019049390 A1 | 14-02-2019 | BE 1024456 A1 | 23-02-2018 |
| | | EP 3411690 A1 | 12-12-2018 |
| | | US 2019049390 A1 | 14-02-2019 |
| | | WO 2017134086 A1 | 10-08-2017 |
| US 5444535 A | 22-08-1995 | CA 2126387 A1 | 10-02-1995 |
| | | US 5444535 A | 22-08-1995 |

For more details about this annex : see Official Journal of the European Patent Office, No. 12/82

**REFERENCES CITED IN THE DESCRIPTION**

**Patent documents cited in the description**

- EP 19200246
- EP 19200221